(19) **Europäisches Patentamt**

**European Patent Office**

**Office européen des brevets**

(11) **EP 1 482 672 A1**

(12) **EUROPÄISCHE PATENTANMELDUNG**

(43) Veröffentlichungstag:
**01.12.2004 Patentblatt 2004/49**

(51) Int Cl.⁷: **H04L 7/02**

(21) Anmeldenummer: **03011865.7**

(22) Anmeldetag: **26.05.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **Delphi Technologies, Inc.**
**Troy, MI 48007 (US)**

(72) Erfinder: **Hell, Jürgen**
**51429 Bergisch Gladbach (DE)**

(74) Vertreter: **Manitz, Finsterwald & Partner GbR**
**Postfach 31 02 20**
**80102 München (DE)**

(54) **Abtastung zur Quadraturdemodulation**

(57)     Bei einem Abtastverfahren zur Quadraturdemodulation eines modulierten Analogsignals wird durch eine zeitversetzte Abtastung mit anschließender Umwandlung mittels wenigstens eines Analog/Digital-Wandlers eine Realteilkomponente und eine dazu orthogonale Imaginärteilkomponente erzeugt. Dabei werden die Abtastpositionen relativ zum Träger des modulierten Analogsignals mittels einer Steuer- und/oder Regeleinrichtung so reguliert, dass sie stets im Bereich einer der Phasenwinkel 45°, 135°, 225° und 315° des modulierten Analogsignals liegen. Es wird auch ein entsprechender Abtaster beschrieben.

FIG. 1

**Beschreibung**

Die Erfindung betrifft ein Abtastverfahren zur Quadraturdemodulation eines modulierten Analogsignals, bei dem durch eine zeitversetzte Abtastung mit anschließender Umwandlung mittels wenigstens eines Analog/Digital-Wandlers eine Realteilkomponente und eine dazu orthogonale Imaginärteilkomponente erzeugt wird. Sie betrifft ferner einen Abtaster gemäß dem Oberbegriff des Anspruchs 15.

Zur Demodulation modulierter Signale wird häufig eine sogenannte Quadraturdemodulation angewandt, da eine solche Demodulation für alle Modulationsarten effektiv eingesetzt werden kann. Erfolgt eine solche Demodulation durch digitale Schaltkreise oder Mikroprozessoren, so können die erforderlichen zueinander orthogonalen I- und Q-Komponenten (Imaginärteil, Realteil) durch eine geeignete Abtastung erfolgen. Mehr Informationen hierüber finden sich beispielsweise in einem Aufsatz "Digitale Demodulation und Auswertung" von Dr.-Ing. Anselm Fabig, der im Internet unter der Adresse

http://www.navtec.de/personen/acf/dd/dd_inhb. htm" abrufbar ist.

Üblicherweise wird die Verstärkung des Signals so gewählt, dass ein für den Bereich des Analog/ Digital-Wandlers geeigneter maximaler Signalpegel erzielt wird.

Der Erfindung liegt die Aufgabe zugrunde, ein verbessertes Abtastverfahren sowie einen verbesserten Abtaster der eingangs genannten Art zu schaffen, bei denen der Dynamikbereich und/oder die effektive Auflösung im Zusammenhang mit einem Analog/Digital-Wandler erhöht bzw. verbessert wird.

Bezüglich des Abtastverfahrens wird diese Aufgabe erfindungsgemäß dadurch gelöst, dass die Abtastpositionen relativ zum Träger des modulierten Analogsignals mittels einer Steuer- und/oder Regeleinrichtung so reguliert werden, dass sie stets im Bereich einer der Phasenwinkel 45°, 135°, 225° und 315° des modulierten Analogsignals liegen.

Durch eine entsprechende Regulierung oder Einstellung des Abtastzeitpunktes wird also die nutzbare Auflösung bzw. der Dynamikbereich der Analog/Digital-Wandler erhöht. Eine entsprechende Variation der Abtastpositionen ist möglich, da die Information bezüglich der Modulation über das gesamte Trägersignal hinweg zur Verfügung steht. Das Maximum der Realteilkomponente und der dazu orthogonalen Imaginärteilkomponente wird für die positive und/oder negative Halbwelle des Signals soweit reduziert, dass eine jeweilige Abweichung beispielsweise durch eine Frequenzmodulation und/oder dergleichen stets noch eine hinreichend große Signaländerung mit sich bringt.

Bei einer bevorzugten praktischen Ausgestaltung des erfindungsgemäßen Abtastverfahrens, bei dem die Abtastwerte paarweise so erzeugt werden, dass die Abtastpositionen für ein jeweiliges Abtastwertepaar um 90° versetzt sind, werden die Abtastpositionen für ein jeweiliges Abtastwertepaar relativ zum Träger des modulierten Analogsignals mittels der Steuerund/oder Regeleinrichtung so reguliert, dass sie stets im Bereich eines der Phasenmittelpaare 45°, 135° und 225°, 315° liegen.

In diesem Fall führt eine jeweilige Abweichung beispielsweise bei einer Frequenzmodulation und/oder dergleichen dazu, dass zumindest einer der Abtastwerte ansteigt.

Zur entsprechenden Regulierung der Abtastpositionen kann die Steuerund/oder Regeleinrichtung insbesondere einen Phasenregler umfassen.

Die Regulierung der Abtastpositionen kann beispielsweise über eine entsprechende zeitliche Verzögerung des dem Analog/Digital-Wandler zugeführten modulierten Analogsignals erfolgen. Zur zeitlichen Verzögerung des dem Analog/Digital-Wandler zugeführten modulierten Analogsignals kann ein entsprechend verstellbarer analoger Schaltkreis eingesetzt werden, der dann vorzugsweise über den Phasenregler entsprechend beaufschlagt wird.

Die Regulierung der Abtastpositionen kann beispielsweise auch durch eine entsprechende Phasenverschiebung des Abtasttaktsignals erfolgen. Zur Phasenverschiebung des Abtasttaktsignals kann ein analoger oder ein digitaler Schaltkreis eingesetzt werden. Dabei kann der verstellbare analoge bzw. digitale Schaltkreis insbesondere wieder über einen Phasenregler entsprechend beaufschlagt werden.

Gemäß einer weiteren vorteilhaften Ausgestaltung des erfindungsgemäßen Abtastverfahrens erfolgt die Regulierung der Abtastpositionen dadurch, dass die Abtastfrequenz höher als die Trägerfrequenz gewählt wird, dass mit dieser höheren Abtastfrequenz eine Mehrzahl von relativ zueinander zeitlich verzögerten Abtastwerten erzeugt wird und dass aus dieser Mehrzahl von Abtastwerten Abtastwerte bzw. Abtastwertepaare ausgewählt werden, die bei den vorgegebenen Abtastpositionen abgetastet wurden.

Entsprechendes kann grundsätzlich beispielsweise auch mit analogen Verzögerungsleitungen und einer analogen Regulierung der Abtastphase erreicht werden, was allerdings mit einem höheren Aufwand und entsprechend höheren Kosten verbunden ist.

Die Regulierung der Abtastpositionen durch eine entsprechende Auswahl der betreffenden Abtastwerte bzw. Abtastwertepaare aus einer höheren Anzahl von Abtastwerten bringt u.a. den Vorteil mit sich, dass die korrekten Werte unmittelbar nach einer jeweiligen Änderung der Signalphase erhalten werden können, so dass eine solche Vorgehensweise insbesondere auch für eine Phasen- und Frequenzmodulation mit schnellen Signaländerungen geeignet ist.

Die Auswahl von Abtastwerten bzw. Abtastwertepaaren kann insbesondere durch eine der Steuer- und/oder Regeleinrichtung zugeordnete Auswahllogik erfolgen.

Gemäß einer weiteren zweckmäßigen Ausgestaltung des erfindungsgemäßen Abtastverfahrens wird der Dynamikbereich durch Verändern des Pegels des modulierten Analogsignals und/oder dadurch weiter erhöht, dass nur im Bereich eines der beiden Phasenmittelpaare 45°, 135° und 225°, 315° abgetastet wird.

Bevorzugt wird ein Phasenkorrektursignal erzeugt, das bei einer späteren Berechnung der Signalphase zur Kompensation einer jeweiligen Abtastphasenänderung herangezogen werden kann.

Der erfindungsgemäße Abtaster zeichnet sich entsprechend dadurch aus, dass die Abtastpositionen relativ zum Träger des modulierten Analogsignals mittels einer Steuer- und/oder Regeleinrichtung so regulierbar sind, dass sie stets im Bereich einer der Phasenwinkel 45°, 135°, 225° und 315° des modulierten Analogsignals liegen.

Mit dem erfindungsgemäßen Abtastverfahren sowie dem erfindungsgemäßen Abtaster kann also der nutzbare Dynamikbereich eines durch eine entsprechende Abtastung die zueinander orthogonalen Komponenten erzeugenden Analog/ Digital-Wandlers erhöht werden, indem die Abtastphase durch Verwendung eines Regulators in einem kleinen Bereich des Signalbereichs gehalten wird und / oder die Verstärkung und die analoge Signalaufbereitung optimal an die gegebenen Sättigungswerte der analogen Schaltkreise und/oder des Analog/Digital-Wandler angepasst werden.

Das erfindungsgemäße Abtastverfahren sowie der erfindungsgemäße Abtaster können insbesondere im Kraftfahrzeugbereich beispielsweise zur Bereichsüberwachung u.a. zur inneren Überwachung eingesetzt werden. Dabei ist beispielsweise ein Einsatz bei einem Ultraschall- und/oder Mikrowellen-Bereichsüberwachungssystem denkbar. Dabei können beispielsweise empfangene reflektierte Ultraschall- bzw. Mikrowellensignale zur Erfassung von Objektbewegungen in dem zu überwachenden Bereich entsprechend ausgewählt werden. So können insbesondere Änderungen der Phase zur Erfassung jeweiliger Objektbewegungen herangezogen werden.

Die Erfindung ist grundsätzlich auch für alle Modulationen der Nachrichtentechnik anwendbar.

Die Erfindung wird im folgenden anhand von Ausführungsbeispielen unter Bezugnahme auf die Zeichnung näher erläutert; in dieser zeigen:

Figur 1 eine schematische Darstellung eines modulierten Analogsignals mit erfindungsgemäß regulierten Abtastpositionen,

Figur 2 eine komplexe Darstellung der bei den beiden in der Figur 1 gezeigten Abtastzeitpunkten erhaltenen zueinander orthogonalen Komponenten,

Figur 3 eine schematische Darstellung einer Ausführungsform eines Abtasters, bei der die Regulierung der Abtastpositionen über eine entsprechende zeitliche Verzögerung des dem Analog/Digital-Wandler zugeführten modulierten Analogsignals erfolgt,

Figur 4 eine schematische Darstellung einer weiteren Ausführungsform des Abtasters, bei der die Regulierung der Abtastpositionen durch eine entsprechende Phasenverschiebung des Abtasttaktsignals erfolgt,

Figur 5 eine schematische Darstellung einer weiteren Ausführungsform des Abtasters, bei der die Regulierung der Abtastpositionen dadurch erfolgt, dass aus einer Mehrzahl von Abtastwerten, die bei einer höheren Abtastfrequenz abgetastet wurden und relativ zueinander zeitlich verzögert sind, entsprechende Abtastwerte ausgewählt werden, und

Figur 6 eine schematische Darstellung einer weiteren Ausführungsform, bei der sich durch eine asymmetrische Aussteuerung eine weitere Verbesserung des Dynamikbereichs ergibt.

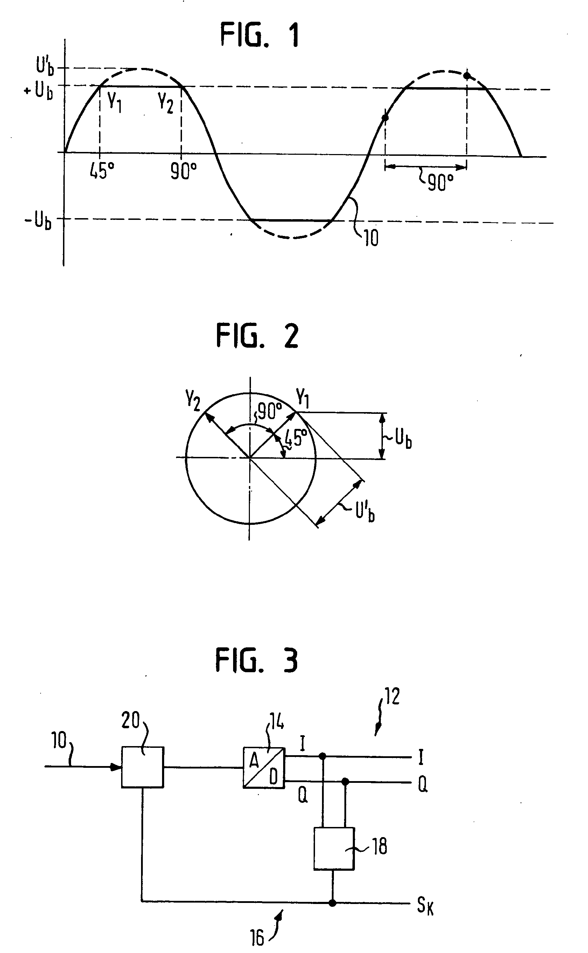

Figur 1 zeigt in schematischer Darstellung ein moduliertes Analogsignal 10, das mittels eines entsprechenden Abtasters 12 (vgl. beispielsweise auch die Figuren 3 bis 5) in Komponenten zur Quadraturdemodulation zerlegt wird.

Durch eine zeitversetzte Abtastung mit anschließender Umwandlung mittels wenigstens eines Analog/Digital-Wandlers 14 (siehe auch die Figuren 3 bis 5) wird eine Realteilkomponente $Y_1$ und eine dazu orthogonale Imaginärteilkomponente $Y_2$ (vgl. die Figuren 1 und 2) erzeugt.

Dabei werden die Abtastpositionen relativ zum Träger des modulierten Analogsignals 10 (vgl. Figur 1 ) mittels einer Steuer- und/ oder Regeleinrichtung 16 (vgl. auch die Figuren 3 bis 5) so reguliert, dass sie stets im Bereich einer der Phasenwinkel 45°, 135°, 235° und 315° des modulierten Analogsignals 10 bzw. des Trägers liegen.

Wie insbesondere anhand der Figuren 1 und 2 zu erkennen ist, werden die Abtastwerte $Y_1$, $Y_2$ paarweise so erzeugt, dass die Abtastpositionen für ein jeweiliges Abtastwertepaar $Y_1$, $Y_2$ um 90° versetzt sind. Überdies werden die betreffenden Abtastpositionen für ein jeweiliges Abtastwertepaar $Y_1$, $Y_2$ relativ zum Träger des modulierten Analogsignals 10 mittels der Steuer- und/oder Regeleinrichtung 16 so reguliert, dass sie stets im Bereich eines der Phasenwinkelpaare 45°, 135° und 235°, 315° liegen (vgl. die Figuren 1 und 2).

In den Figuren 1 und 2 ist der bei den entsprechenden Abtastpositionen erhaltene Pegel mit "U$_b$" angegeben. Der Pegel, den man bei den Scheitelwerten des Trägers erhalten würde, ist mit "U'$_b$" angegeben.

Es gilt also die Beziehung:

$$U'_b \cdot \sin(45°) = U_b,$$

woraus sich die folgende Dynamikverbesserung ergibt:

$$\frac{U'_b}{U_b} = \frac{1}{\sin(45°)} = \sqrt{2} = 1{,}41.$$

Figur 2 zeigt in komplexer Darstellung die bei den beiden in der Figur 1 wiedergegebenen Abtastzeitpunkten erhaltenen zueinander orthogonalen Komponenten $Y_1$, $Y_2$.

Wie anhand des rechten Teils der Figur 1 zu erkennen ist, bringt eine jeweilige Abweichung einen Anstieg einer der beiden Abtastwerte mit sich.

Figur 3 zeigt in schematischer Darstellung eine beispielhafte Ausführungsform eines Abtasters 10.

Dabei umfasst die Steuer- und/oder Regeleinrichtung 16 zur Regulierung der Abtastpositionen einen Phasenregler 18. Die beiden Eingänge dieses Phasenreglers 18 sind mit dem I-Ausgang (Imaginärteil) bzw. dem Q-Ausgang (Realteil) eines Analogwandlers 14 verbunden, dem das modulierte Analogsignal 10 zugeführt wird.

Im vorliegenden Fall erfolgt die Regulierung der Abtastpositionen über eine entsprechende zeitliche Verzögerung des dem Analog/Digital-Wandler 14 zugeführten modulierten Analogsignals 10 mittels eines verstellbaren analogen Verzögerungs-Schaltkreises 20. Wie anhand der Figur 3 zu erkennen ist, ist der Ausgang des Phasenreglers 18 mit dem Steuereingang des Verzögerungs-Schaltkreises 20 verbunden. Der verstellbare analoge Schaltkreis 20 ist also über den Phasenregler 18 so beaufschlagbar, dass die oben genannten Phasenpositionen eingehalten werden.

Überdies wird ein Phasenkorrektursignal $S_K$ erzeugt, das bei einer späteren Berechnung der Signalphase zur Kompensation einer jeweiligen Abtastphasenänderung heranziehbar ist. Im vorliegenden Fall wird ein solches Phasenkorrektursignal $S_K$ am Ausgang des Phasenreglers 18 abgegriffen.

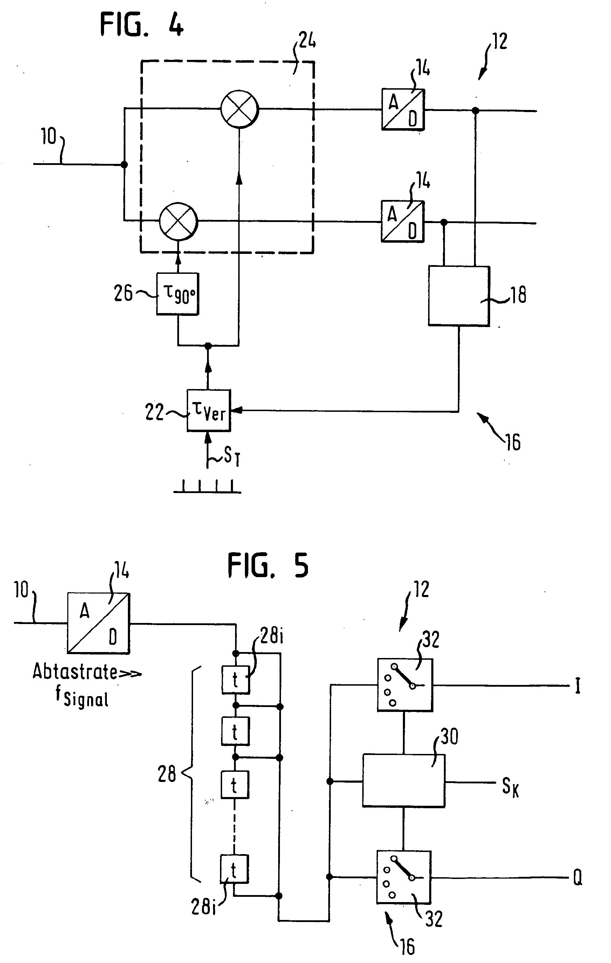

Figur 4 zeigt in schematischer Darstellung eine weitere Ausführungsform eines Abtasters 12, bei der die Abtastpositionen durch eine entsprechende Phasenverschiebung des Abtasttaktsignals $S_T$ regulierbar sind. Zur Phasenverschiebung des Abtasttaktsignals $S_T$ kann beispielsweise ein analoger Schaltkreis 22 vorgesehen sein, über den die jeweilige Verzögerungszeit $\tau_{Ver}$ variabel einstellbar ist.

Im vorliegenden Fall sind zwei Analog/Digital-Wandler 14 vorgesehen, denen ein Abtast- und Haltekreis 24 vorgeschaltet ist, über den ein Abtastwertepaar erzeugt wird, dessen Abtastwerte um 90° gegeneinander versetzt sind, nachdem eine Abtaststufe direkt und die andere mit einer entsprechenden Zeitverzögerung $\tau_{90°}$ durch den Schaltkreis 22 angesteuert wird.

Die Ausgänge der beiden Analog/Digital-Wandler 14 sind mit verschiedenen Eingängen des Phasenreglers 18 verbunden. Über den Phasenregler 18 wird der Schaltkreis 22 beaufschlagt, um über eine entsprechende Phasenverschiebung des Abtasttaktsignals $S_T$ die Abtastpositionen entsprechend zu regulieren.

Zur Phasenverschiebung des Abtasttaktsignals $S_T$ kann grundsätzlich auch ein digitaler Schaltkreis vorgesehen sein.

Figur 5 zeigt in schematischer Darstellung eine weitere Ausführungsform des Abtasters 12. In diesem Fall erfolgt die Regulierung der Abtastpositionen dadurch, dass die Abtastfrequenz relativ hoch bzw. höher als die Trägerfrequenz gewählt und mit dieser höheren Abtastfrequenz eine Mehrzahl von relativ zueinander zeitlich verzögerten Abtastwerten erzeugt wird, aus der dann die betreffenden Abtastwerte bzw. Abtastwertepaare ausgewählt werden, die bei den vorgegebenen Abtastpositionen abgetastet wurden.

Das moduliert Analogsignal 10 wird wieder wenigstens einem Analog/Digital-Wandler 14 zugeführt, wobei im vorliegenden Fall die Abtastfrequenz deutlich über der Signal- bzw. Trägerfrequenz liegt. Im Anschluss an den Analog/Digital-Wandler 14 ist es eine Mehrzahl 28 von Verzögerungselementen $28_i$ vorgesehen, an denen eine entsprechende Mehrzahl von relativ zueinander zeitlich verzögerten Abtastwerten abgegriffen werden kann.

Zur Auswahl der jeweiligen Abtastwerte bzw. Abtastwertepaare ist eine der Steuer- und/oder Regeleinrichtungen 16 zugeordnete Auswahllogik 30 vorgesehen. Im Imaginärteilzweig I und im Realteilzweig Q ist jeweils ein von der Auswahllogik 30 angesteuerter Auswahlschalter 32 vorgesehen.

Die Auswahllogik 30 liefert auch wieder ein Phasenkorrektursignal $S_K$, das bei einer späteren Berechnung der Signalphase zur Kompensation einer jeweiligen Abtastphasenänderung herangezogen werden kann.

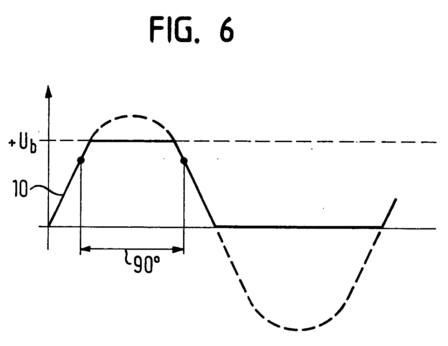

Figur 6 zeigt in schematischer Darstellung eine weitere Ausführungsform, bei der sich durch eine asymmetrische Aussteuerung eine Verbesserung des Dynamikbereichs ergibt.

Wie anhand der Figur 6 zu erkennen ist, wird im vorliegenden Fall nur im Bereich eines der beiden Phasenmittelpaare 45°, 135° und 225°, 315° abgetastet. Beim dargestellten Ausführungsbeispiel erfolgt nur während der positiven Halbwelle des modulierten Analogsignals 10 bzw. Trägersignals eine solche zweifache Abtastung. Die negative Halbwelle bleibt außer Betracht, sie wird in der dargestellten Weise also abgeschnitten.

Grundsätzlich kann der Dynamikbereich auch durch Verändern des Signalpegels und eine entsprechende Optimierung des Arbeitsbereichs für ein Paar von möglichen Abtastpositionen, z.B. 45°, 135° wie in Figur 6 gezeigt, oder 225°, 315°, weiter erhöht werden.

Für Modulationen mit schneller Änderung der Phase ist insbesondere die Ausführungsform gemäß der Figur 5 geeignet. Sie eignet sich überdies für alle Modulationsarten, bei denen zumindest eine Halbwelle des Trägers quasi konstant übertragen wird.

**Bezugszeichenliste**

| 10 | moduliertes Analogsignal |
|----|--------------------------|
| 12 | Abtaster |
| 14 | Analog/ Digital-Wandler |
| 16 | Steuer- und/oder Regeleinrichtung |
| 18 | Phasenregler |
| 20 | Verzögerungs-Schaltkreis |
| 22 | Schaltkreis |
| 24 | Abtast- und Haltekreis |
| 26 | Verzögerungselement |
| 28 | Mehrzahl von Verzögerungselementen |
| $28_i$ | Verzögerungselement |
| 30 | Auswahllogik |
| 32 | Auswahlschalter |
| $S_K$ | Phasenkorrektursignal |
| $S_T$ | Abtasttaktsignal |
| $Y_1$ | Abtastwert, Realteilkomponente |
| $Y_2$ | Abtastwert, Imaginärteilkomponente |
| $\tau_{Ver}$ | Verzögerungszeit |

**Patentansprüche**

1. Abtastverfahren zur Quadraturdemodulation eines modulierten Analogsignals (10), bei dem durch eine zeitversetzte Abtastung mit anschließender Umwandlung mittels wenigstens eines Analog/Digital-Wandlers (14) eine Realteilkomponente ($Y_1$) und eine dazu orthogonale Imaginärteilkomponente ($Y_2$) erzeugt wird,
   **dadurch gekennzeichnet,**
   **dass** die Abtastpositionen relativ zum Träger des modulierten Analogsignals (10) mittels einer Steuer- und/ oder Regeleinrichtung (16) so reguliert werden, dass sie stets im Bereich einer der Phasenwinkel 45°, 135°, 225° und 315° des modulierten Analogsignals (10) liegen.

2. Abtastverfahren nach Anspruch 1,
   **dadurch gekennzeichnet,**
   **dass** die Abtastwerte ($Y_1$, $Y_2$) paarweise so erzeugt werden, dass die Abtastpositionen für ein jeweiliges Abtastwertepaar ($Y_1$, $Y_2$) um 90° versetzt sind, und dass die Abtastpositionen für ein jeweiliges Abtastwertepaar ($Y_1$, $Y_2$) relativ zum Träger des modulierten Analogsignals (10) mittels der Steuer- und/oder Regeleinrichtung (16) so reguliert werden, dass sie stets im Bereich eines der Phasenwinkelpaare 45°, 135° und 225°, 315° liegen.

3. Abtastverfahren nach Anspruch 1 oder 2,
   **dadurch gekennzeichnet,**
   **dass** die Steuer- und/oder Regeleinrichtung (16) zur Regulierung der Abtastpositionen einen Phasenregler (18) umfasst.

4. Abtastverfahren nach einem der vorhergehenden Ansprüche,
   **dadurch gekennzeichnet,**
   **dass** die Regulierung der Abtastpositionen über eine entsprechende zeitliche Verzögerung des dem Analog/Digital-Wandler (14) zugeführten modulierten Analogsignals (10) erfolgt.

5. Abtastverfahren nach Anspruch 4,
   **dadurch gekennzeichnet,**
   **dass** zur zeitlichen Verzögerung des dem Analog/ Digital-Wandler (14) zugeführten modulierten Analogsignals (10) ein verstellbarer analoger Schaltkreis (20) eingesetzt wird.

6. Abtastverfahren nach Anspruch 5,
   **dadurch gekennzeichnet,**
   **dass** der verstellbare analoge Schaltkreis (20) über den Phasenregler (18) entsprechend beaufschlagt wird.

7. Abtastverfahren nach einem der vorhergehenden Ansprüche,
   **dadurch gekennzeichnet,**
   **dass** die Regulierung der Abtastpositionen durch eine entsprechende Phasenverschiebung des Abtasttaktsignals ($S_T$) erfolgt.

8. Abtastverfahren nach einem der Anspruch 7,
   **dadurch gekennzeichnet,**
   **dass** zur Phasenverschiebung des Abtasttaktsignals ($S_T$) ein analoger Schaltkreis (22) eingesetzt wird.

9. Abtastverfahren nach einem der Anspruch 7,
   **dadurch gekennzeichnet ,**
   **dass** zur Phasenverschiebung des Abtasttaktsignals ($S_T$) ein digitaler Schaltkreis eingesetzt wird.

10. Abtastverfahren nach einem der Anspruch 8 oder 9,
    **dadurch gekennzeichnet ,**
    **dass** der verstellbare analoge bzw. digitale Schaltkreis (22) über den Phasenregler (18) entsprechend beaufschlagt wird.

11. Abtastverfahren nach einem der vorhergehenden Ansprüche,
    **dadurch gekennzeichnet ,**
    **dass** die Regulierung der Abtastpositionen dadurch erfolgt, dass die Abtastfrequenz höher als die Trägerfrequenz gewählt wird, dass mit dieser höheren Abtastfrequenz eine Mehrzahl von relativ zueinander zeitlich verzögerten Abtastwerten erzeugt wird und dass aus dieser Mehrzahl von Abtastwerten Abtastwerte bzw. Abtastwertepaare ausgewählt werden, die bei den vorgegebenen Abtastpositionen abgetastet wurden.

12. Abtastverfahren nach Anspruch 11,
**dadurch gekennzeichnet ,**
**dass** die Auswahl von Abtastwerten bzw. Abtastwertepaaren durch eine der Steuer- und/oder Regeleinrichtung (16) zugeordnete Auswahllogik (30) erfolgt.

13. Abtastverfahren nach einem der vorhergehenden Ansprüche,
**dadurch gekennzeichnet ,**
**dass** der Dynamikbereich durch Verändern des Pegels des modulierten Analogsignals (10) und/oder dadurch weiter erhöht wird, dass nur im Bereich eines der beiden Phasenwinkelpaare 45°, 135° und 225°, 315° abgetastet wird.

14. Abtastverfahren nach einem der vorhergehenden Ansprüche,
**dadurch gekennzeichnet,**
**dass** ein Phasenkorrektursignal ($S_K$) erzeugt wird, das bei einer späteren Berechnung der Signalphase zur Kompensation einer jeweiligen Abtastphasenänderung heranziehbar ist.

15. Abtaster (12) zur Erzeugung der Komponenten für eine Quadraturdemodulation eines modulierten Analogsignals (10), bei dem durch eine zeitversetzte Abtastung mit anschließender Umwandlung mittels wenigstens eines Analog/Digital-Wandlers (14) eine Realteilkomponente ($Y_1$) und eine dazu orthogonale Imaginärteilkomponente ($Y_2$) erzeugt wird, insbesondere zur Durchführung des Verfahrens nach einem der vorhergehenden Ansprüche,
**dadurch gekennzeichnet,**
**dass** die Abtastpositionen relativ zum Träger des modulierten Analogsignals (10) mittels einer Steuer- und/ oder Regeleinrichtung (16) so regulierbar sind, dass sie stets im Bereich einer der Phasenwinkel 45°, 135°, 225° und 315° des modulierten Analogsignals (10) liegen.

16. Abtaster nach Anspruch 15,
**dadurch gekennzeichnet,**
**dass** die Abtastwerte ($Y_1$, $Y_2$) paarweise so erzeugt werden, dass die Abtastpositionen für ein jeweiliges Abtastwertepaar ($Y_1$, $Y_2$) um 90° versetzt sind, und dass die Abtastpositionen für ein jeweiliges Abtastwertepaar ($Y_1$, $Y_2$) relativ zum Träger des modulierten Analogsignals (10) mittels der Steuer- und/oder Regeleinrichtung (16) so regulierbar sind, dass sie stets im Bereich eines der Phasenwinkelpaare 45°, 135° und 225°, 315° liegen.

17. Abtaster nach Anspruch 15 oder 16,
**dadurch gekennzeichnet,**
**dass** die Steuer- und/oder Regeleinrichtung (16) zur Regulierung der Abtastpositionen einen Phasenregler (18) umfasst.

18. Abtaster nach einem der vorhergehenden Ansprüche,
**dadurch gekennzeichnet,**
**dass** die Abtastpositionen über eine entsprechende zeitliche Verzögerung des dem Analog/Digital-Wandler (14) zugeführten modulierten Analogsignals (10) regulierbar sind.

19. Abtaster nach Anspruch 18,
**dadurch gekennzeichnet,**
**dass** zur zeitlichen Verzögerung des dem Analog/Digital-Wandler (14) zugeführten modulierten Analogsignals (10) ein verstellbarer analoger Schaltkreis (20) vorgesehen ist.

20. Abtaster nach Anspruch 19,
**dadurch gekennzeichnet,**
**dass** der verstellbare analoge Schaltkreis (20) über den Phasenregler (18) entsprechend beaufschlagbar ist.

21. Abtaster nach einem der vorhergehenden Ansprüche,
**dadurch gekennzeichnet,**
**dass** die Abtastpositionen durch eine entsprechende Phasenverschiebung des Abtasttaktsignals ($S_T$) regulierbar sind.

22. Abtaster nach einem der Anspruch 21,
**dadurch gekennzeichnet ,**
**dass** zur Phasenverschiebung des Abtasttaktsignals ($S_T$) ein analoger Schaltkreis (22) vorgesehen ist.

23. Abtaster nach einem der Anspruch 21,
**dadurch gekennzeichnet ,**
**dass** zur Phasenverschiebung des Abtasttaktsignals ($S_T$) ein digitaler Schaltkreis vorgesehen ist.

24. Abtaster nach einem der Anspruch 22 oder 23,
**dadurch gekennzeichnet ,**
**dass** der verstellbare analoge bzw. digitale Schaltkreis (22) über den Phasenregler (18) entsprechend beaufschlagbar ist.

25. Abtaster nach einem der vorhergehenden Ansprüche,
**dadurch gekennzeichnet ,**

**dass** die Regulierung der Abtastpositionen dadurch erfolgt, dass die Abtastfrequenz höher als die Trägerfrequenz gewählt ist, dass mit dieser höheren Abtastfrequenz eine Mehrzahl von relativ zueinander zeitlich verzögerten Abtastwerten erzeugt wird und dass aus dieser Mehrzahl von Abtastwerten Abtastwerte bzw. Abtastwertepaare ausgewählt werden, die bei den vorgegebenen Abtastpositionen abgetastet wurden.

26. Abtaster nach Anspruch 25,
    **dadurch gekennzeichnet ,**
    **dass** zur Auswahl von Abtastwerten bzw. Abtastwertepaaren eine der Steuer- und/oder Regeleinrichtung (16) zugeordnete Auswahllogik (30) vorgesehen ist.

27. Abtaster nach einem der vorhergehenden Ansprüche,
    **dadurch gekennzeichnet ,**
    **dass** der Dynamikbereich durch Verändern des Pegels des modulierten Analogsignals (10) und/oder dadurch weiter erhöht ist, dass nur im Bereich eines der beiden Phasenwinkelpaare 45°, 135° und 225°, 315° abgetastet wird.

28. Abtaster nach einem der vorhergehenden Ansprüche,
    **dadurch gekennzeichnet ,**
    **dass** ein Phasenkorrektursignal ($S_K$) erzeugt wird, das bei einer späteren Berechnung der Signalphase zur Kompensation einer jeweiligen Abtastphasenänderung heranziehbar ist.

FIG. 1

FIG. 2

FIG. 3

## FIG. 4

## FIG. 5

FIG. 6

**Europäisches Patentamt**

## EUROPÄISCHER RECHERCHENBERICHT

Nummer der Anmeldung

EP 03 01 1865

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
| X | US 5 216 696 A (POKLEMBA) 1. Juni 1993 (1993-06-01) * Abbildung 6 * --- | 1-28 | H04L7/02 |
| X | US 4 520 492 A (WEBER) 28. Mai 1985 (1985-05-28) * Spalte 2, Zeile 30 - Zeile 40 * --- | 1-28 | |
| X | EP 0 007 726 A (MOTOROLA) 6. Februar 1980 (1980-02-06) * Abbildung 2 * * Seite 4, Zeile 33 - Zeile 36 * --- | 1-28 | |
| X | US 4 379 284 A (BOYKIN) 5. April 1983 (1983-04-05) * Abbildung 5 * ----- | 1-28 | |
| | | | RECHERCHIERTE SACHGEBIETE (Int.Cl.7) |
| | | | H04L |

Der vorliegende Recherchenbericht wurde für alle Patentansprüche erstellt

| Recherchenort | Abschlußdatum der Recherche | Prüfer |
|---|---|---|
| DEN HAAG | 4. November 2003 | Scriven, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 03 01 1865

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-11-2003

| Im Recherchenbericht angeführtes Patentdokument | | Datum der Veröffentlichung | Mitglied(er) der Patentfamilie | | | Datum der Veröffentlichung |
|---|---|---|---|---|---|---|
| US 5216696 | A | 01-06-1993 | US | 5052027 | A | 24-09-1991 |
| | | | CA | 2102500 | A1 | 17-01-1993 |
| | | | EP | 0669058 | A1 | 30-08-1995 |
| | | | JP | 6509219 | T | 13-10-1994 |
| | | | MX | 9204204 | A1 | 01-04-1993 |
| | | | WO | 9302506 | A1 | 04-02-1993 |
| US 4520492 | A | 28-05-1985 | DE | 3146281 | A1 | 01-06-1983 |
| | | | CA | 1188741 | A1 | 11-06-1985 |
| | | | DE | 3262146 | D1 | 14-03-1985 |
| | | | EP | 0080020 | A1 | 01-06-1983 |
| EP 0007726 | A | 06-02-1980 | US | 4181967 | A | 01-01-1980 |
| | | | EP | 0007726 | A1 | 06-02-1980 |
| US 4379284 | A | 05-04-1983 | US | 4311964 | A | 19-01-1982 |
| | | | AU | 530917 | B2 | 04-08-1983 |
| | | | AU | 6204080 | A | 20-08-1981 |
| | | | BR | 8005989 | A | 31-03-1981 |
| | | | CA | 1144257 | A1 | 05-04-1983 |
| | | | DE | 3069874 | D1 | 07-02-1985 |
| | | | EP | 0026624 | A2 | 08-04-1981 |
| | | | FI | 802907 | A | 22-03-1981 |
| | | | JP | 56054150 | A | 14-05-1981 |
| | | | KR | 8500278 | B1 | 15-03-1985 |
| | | | MX | 150118 | A | 15-03-1984 |
| | | | NO | 802785 | A | 23-03-1981 |

EPO FORM P0461

Für nähere Einzelheiten zu diesem Anhang : siehe Amtsblatt des Europäischen Patentamts, Nr.12/82